# EUROPÄISCHE PATENTSCHRIFT

(11) **EP 0 919 117 B1**
(45) Veröffentlichungstag und Bekanntmachung des Hinweises auf die Patenterteilung: **17.09.2003**
(21) Anmeldenummer: 98121053.7
(22) Anmeldetag: 06.11.1998
(51) Int. Cl.: A01D 17/10, B65G 15/52, B65G 17/06

(54) **Steilförderer für landwirtschaftliche Erntemaschinen**
Inclined conveyor for agricultural harvesting machinery
Transporteur incliné pour machines de récolte agricoles

(30) Priorität: 19.11.1997 DE 19751244
(43) Veröffentlichungstag der Anmeldung: 02.06.1999
(73) Patentinhaber: ARTEMIS Kautschuk- und Kunststofftechnik GmbH & Cie, D-30559 Hannover (DE)
(72) Erfinder: Tjabringa, Heiko, 9628 CM Siddeburen (NL)
(74) Vertreter: Depmeyer, Jochen

(56) Entgegenhaltungen:
- DE-A- 3 309 281
- DE-B- 2 601 500
- US-A- 2 309 155

## Beschreibung

Die Erfindung betrifft einen für Knollenfrüchte, insb. Kartoffeln, bestimmter, umlaufender Steilförderer gemäß dem Oberbegriff des Anspruchs 1.

Bei den bekannten Förderern dieser Art werden die Aufnahmen für das Fördergut von mit gegenseitigem Abstand angeordneten Stäben gebildet; Förderer dieser Art werden im allgemeinen Siebstabbänder genannt, weil die mit Abstand angeordneten Stäbe einerseits fördern können und andererseits eine gewisse Siebung ermöglichen. Derartige Förderer haben ein vergleichsweise großes Eigengewicht, das nicht zuletzt durch die meist aus Stahl bestehenden, quer verlaufenden Stäbe bedingt ist.

Aus der DE 33 09 281 A1 ist ein Förderer der eingangs genannten Art bekannt, bei dem das die Aufnahme für das Fördergut bildende Netz aus Längs- und Querdrähten besteht und in der durch die zugfesten Bänder gebildeten Ebene angeordnet ist, wobei die Mitnehmer durch an den Querstäben angeordnete Stäbe gebildet sind, die im wesentlichen senkrecht zu der durch die zugfesten gebildeten Ebene stehen und kammartig durch die Maschen des Netzes hindurchgreifen.

Diese Nachteile möchte die Erfindung beseitigen und demgemäss einen Steilförderer der eingangs erwähnten Art vorschlagen, dessen Eigengewicht vergleichsweise gering ist.

Diese Aufgabe wird erfindungsgemäß durch die Merkmale des Anspruchs 1 gelöst.

Demgemäss bildet das vergleichsweise gewichtsmäßig leichte Netz die oben erwähnte Aufnahme für das Fördergut zwischen den Mitnehmern, während eine Befestigung des Netzes im Bereich der Mitnehmer erfolgt, und zwar durch den formschlüssigen Eingriff der Vorsprünge der Mitnehmer in die Ausnehmungen des Netzes, wo auch eine Absicherung zum ungewollten Entfernen des Netzes von den Mitnehmern z.B. durch einen in die Mitnehmer eingeführten Querstab erfolgen kann.

Der zwischen benachbarten Mitnehmern befindliche Netzabschnitt kann durch Spannen des Netzes unterstützungsfrei sein, jedoch ist es auch bei schwerem Fördergut möglich, diese Netzabschnitte z.B. durch einen an den seitlichen Bändern befestigten Querstab zu unterfangen.

Die Mitnehmer können an sich bekannte, an Querstäben verankerte Profile aus Gummi oder dergl. sein, die oben mit einer Vielzahl aufeinander folgender Vorsprünge für den Netzeingriff auszustatten sind.

Weitere Einzelheiten der Erfindung werden anhand der Zeichnung erläutert, in der Ausführungsbeispiele der Erfindung dargestellt sind. Es zeigen
Fig. 1 einen Teillängsschnitt durch ein umlaufendes Band für einen Steilförderer an Kartoffelerntemaschinen,
Fig. 2 einen Schnitt nach der Linie II - II von Fig.1,
Fig. 3 einen weiter abgewandelten Teilquerschnitt durch ein Band zur Förderung von Kartoffeln und
Fig. 4 einen Schnitt nach der Linie VI - VI von Fig. 3.

Das in Richtung des Pfeiles 1 umlaufende Förderband weist an beiden seitlichen Rändern ein zugfestes, biegsames, aus Gummi mit Verstärkungseinlagen bestehendes, flaches Band 2 auf. An diesen Bändern sind im Abstand von einander quer verlaufende Mitnehmer. 3 befestigt, die eine Steilförderung ermöglichen sollen.

Die Mitnehmer 3 sind Profile aus Gummi od. dgl. und werden an ihrem verbreiterten Fuss 4 von zwei steifen, z.B. aus Stahl bestehenden Stäben 5 durchsetzt, deren Enden auf den Bändern 2 aufliegen und dort durch Nietung od. dgl. bei 6 befestigt sind. Aufgrund der paarweise angeordneten Stäbe 5 sind die Mitnehmer 3 kippsicher gelagert.

Am oberen Rand ist der Mitnehmer 3 mit einer Vielzahl Ausnehmungen 7 versehen unter Bildung kleiner Vorsprünge 8, die in die Durchbrechungen 9 eines Netzes 10 eingreifen.

Dieses Netz besteht aus zugfesten Fäden oder dünnen Seilen 11, 12, die schubfest miteinander verbunden sind und quadratische Durchbrechungen 9 bilden. Die Elemente 12 verlaufen in Bandlängsrichtung, die Elemente 11 im rechten Winkel dazu. Die lichte Maschenweite beträgt etwa o.5 - 5 cm, vorzugsweise aber 1 - 3 cm.

Da die Vorsprünge 8 in die Durchbrechungen 9 eingreifen, kann sich das Netz 10 nicht verschieben. Um zudem sicherzustellen, dass das Netz 10 nicht aus den Vorsprüngen 8 herausgehoben werden kann, sind diese mit einer Bohrung versehen, in die oberhalb des Netzes 10 ein Sicherungstab 13 eingeschoben ist, der sich über die gesamte Breite der Mitnehmer 3 erstreckt und durch die elastische Eigenspannung des Gummis fixiert ist.

Nahe vor und hinter dem Fuss 4 befindet sich noch ein Querstab 14, dessen Enden ebenfalls auf den seitlichen Bändern 2 befestigt sind. Um diese Querstäbe 14 ist das von oben kommende Netz 10 herumgeführt; zwischen den Querstäben 14 benachbarter Mitnehmer 3 ist das Netz 10 frei gespannt. Jedoch kann das Netz 10 bei grösseren Abständen der Mitnehmer 3 ggfs. an einer oder mehreren Stellen durch Querstäbe unterfangen sein.

Infolge der Zugspannung im Netz 10 ergibt sich ein Netzverlauf gemäss Fi. 1. Sie ist im allgemeinen ausreichend, um das Fördergut aufzunehmen. Um dabei Querkontraktionen auszuschliessen, kann das Netz 10 evtl. noch an seinen Rändern im Bereich der Bänder 2 z.B. durch Haken fixiert werden. Eine unerwünschte Längsverschiebung de Netzes 10 ist jedoch nicht möglich, weil der Formschluss am oberen Rand der Mitnehmer 3 gegeben ist.

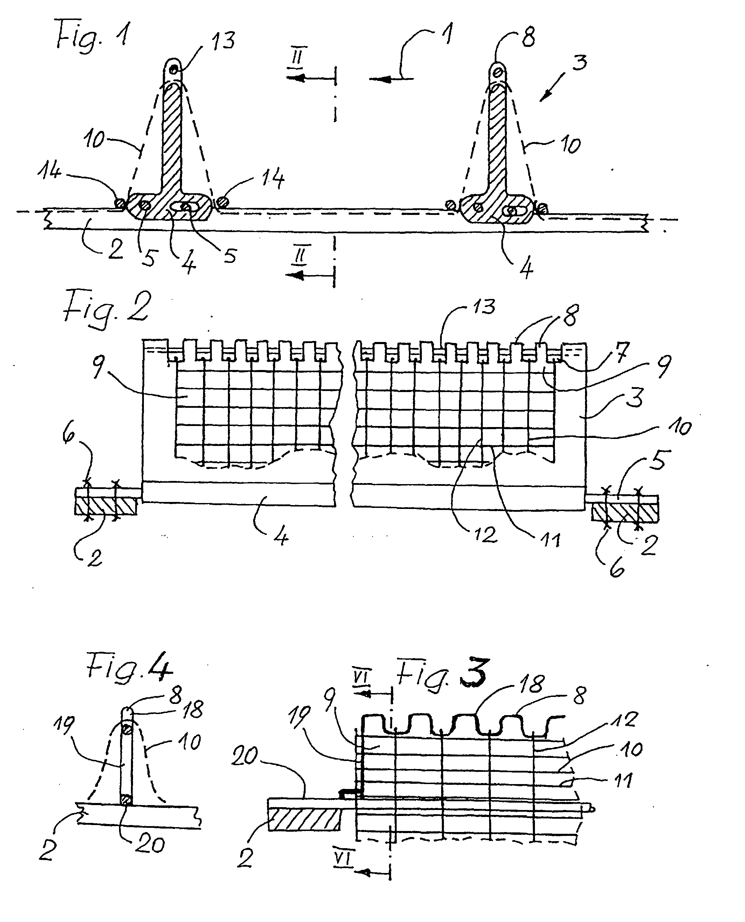

Bei der Ausführung gemäss Fig. 1 und 2 ist das Netz 10 über die Mitnehmer 3 geführt und liegt lediglich zwischen den Mitnehmern 3 etwa in der durch die Bänder 2 bestimmten Ebene.

Das Förderband gemäss Fig. 3 und 4 entspricht im wesentlichen der Ausführung gemäss Fig. 1 und 2, jedoch ist der aus Gummi od. dgl. bestehende Mitnehmerkörper . ersetzt durch einen gebogenen Stab aus Stahl od. dgl., dessen oben liegendes Querteil 18 wellenförmig gebogen ist, um die Vorsprünge 8 zu bilden. Die senkrechten Schenkel 19 sind mit einem an den Bändern 2 befestigten Querstab 20 fest verbunden.

Das Netz 10 kann ggfs. auch so ausgeführt sein, dass seine Elemente 11, 12 mit der Förderbandlängsrichtung Winkel, vorzugsweise Winkel von 45° bilden.

## Patentansprüche

1. Für Knollenfrüchte, insb. Kartoffeln, bestimmter, umlaufender Steilförderer für landwirtschaftliche Erntemaschinen mit zwei oder mehreren einander parallelen, zugfesten, biegsamen, sich in Förderrichtung erstreckenden Bändern zur Befestigung von quer zu den Bändern gerichteten, mit Abstand voneinander angeordneten Mitnehmern, zwischen denen Aufnahmen für das Fördergut vorgesehen sind, wobei die Mitnehmer (3) in Bandquerrichtung gesehen hintereinander angeordnete Vorsprünge (8) aufweisen, die in Durchbrechungen (9) eines biegsamen, aus zugfesten, faden- oder bandförmigen Elementen (11, 12) bestehenden Netzes (10) eingreifen, wobei das Netz die Aufnahme bildet und sich von einem zum anderen Mitnehmer hin erstreckt, und wobei die faden- oder bandförmigen Elemente (11, 12) des Netzes (10) an den Kreuzungsstellen schubfeste Verbindungen aufweisen, **dadurch gekennzeichnet, dass** die Vorsprünge (8) mit Abstand zu der durch die Bänder (2) bestimmten Fläche an den Enden der Mitnehmer (3) angeordnet sind.

2. Förderer nach Anspruch 1, **dadurch gekennzeichnet, dass** die Mitnehmer (3) ein aus Gummi od. dgl. bestehendes Profil sind.

3. Förderer nach Anspruch 1, **dadurch gekennzeichnet, dass** die Vorsprünge (8) durch einen sich in Richtung des Mitnehmers (3) erstreckenden, oberhalb des Netzes (10) befindlichen Sicherheitsstab (13) verbunden sind, der lösbar angeordnet ist.

4. Förderer nach Anspruch 1, **dadurch gekennzeichnet, dass** die Vorsprünge (8) von einem gebogenen Steg eines Stabes (18) gegebildet sind, dessen Schenkel (19) an einem Querstab befestigt, dessen Enden an den seitlichen Bändern (2) des Förderers verankert sind.

5. Förderer nach Anspruch 1, **dadurch gekennzeichnet, dass** das Netz (10) gespannt im Bereich der Mitnehmer (3) und zwischen den Mitnehmern (3) angeordnet ist.

6. Förderer nach Anspruch 5, **dadurch gekennzeichnet, dass** das Netz (10) zwischen den Mitnehmern (3) unterstützungsfrei gehalten ist.

7. Förderer nach Anspruch 1, **dadurch gekennzeichnet, dass** die lichte Mascheriweite etwa 0,5 - 5 cm, vorzugsweise aber 1 - 3 cm beträgt.

8. Förderer nach Anspruch 1, **dadurch gekennzeichnet, dass** Elemente (12) des Netzes (10) sich in Längsrichtung des Förderbandes erstrecken.

9. Förderer nach Anspruch 1, **dadurch gekennzeichnet, dass** vor und hinter den Mitnehmern (3) an den seitlichen Bändern (2) verankerte Querstäbe (14) angeordnet sind, unter die das Netz (10) hindurchgeführt ist.

10. Förderer nach Anspruch 1, **dadurch gekennzeichnet, dass** die das Netz (10) bildenden Elemente mit der Längsrichtung des Förderers einen Winkel, vorzugsweise von etwa 45° bilden.

## Claims

1. Circulatory steeply angled conveyor, which is intended for tuberous crops, more esp. potatoes, for agricultural harvesting machines, said conveyor having two or more substantially inextensible, flexible belts, which are parallel to each other and extend in the direction of conveyance, for securing entrainment means, which are orientated transversely relative to the belts and are spaced from one another, receiving means being provided between said entrainment means for receiving the goods to be conveyed, the entrainment means (3) having projection members (8), which are disposed behind one another, when viewed with respect to the transverse direction of the belt, and engage in openings (9) in a flexible web (10), which comprises substantially inextensible, filament- or strip-like elements (11, 12), the web forming the receiving means and extending from one entrainment means to the other, and the filament- or strip-like elements (11, 12) of the web (10) having shear-resistant connections at the points of intersection, **characterised in that** the projection members (8) are disposed at the ends of the entrainment means (3) at a spacing from the area defined by the belts (2).

2. Conveyor according to claim 1, **characterised in that** the entrainment means (3) are a profile formed from rubber or the like.

3. Conveyor according to claim 1, **characterised in that** the projection members (8) are joined by a securing rod (13), which extends in the direction of the entrainment means (3) and is situated above the web (10), said rod being disposed in a detachable manner.

4. Conveyor according to claim 1, **characterised in that** the projection members (8) are formed by a curved portion of a rod (18), the legs (19) of said rod being mounted on a transverse rod, the ends of which are secured on the lateral belts (2) of the conveyor.

5. Conveyor according to claim 1, **characterised in that** the web (10) is disposed in a tensioned manner in the region of the entrainment means (3) and between the entrainment means (3).

6. Conveyor according to claim 5, **characterised in that** the web (10) is retained between the entrainment means (3) without any support.

7. Conveyor according to claim 1, **characterised in that** the inside mesh width is substantially 0.5 - 5 cm, but preferably 1 - 3 cm.

8. Conveyor according to claim 1, **characterised in that** elements (12) of the web (10) extend in the longitudinal direction of the conveyor belt.

9. Conveyor according to claim 1, **characterised in that** transverse rods (14), which are secured on the lateral belts (2), are disposed in front of and behind the entrainment means (3), the web (10) extending beneath said rods.

10. Conveyor according to claim 1, **characterised in that** the elements, forming the web (10), form an angle, preferably an angle of substantially 45°, with the longitudinal direction of the conveyor.

## Revendications

1. Convoyeur incliné sans fin destiné à convoyer des tubercules, notamment des pommes de terre, pour des machines agricoles de récolte ayant deux ou plusieurs bandes parallèles, résistant à la traction, souples, s'étendant dans la direction de transport et destinées à la fixation d'entraîneurs, qui sont dirigés transversalement aux bandes, qui sont disposés à distance les uns des autres et entre lesquels sont prévus des logements pour le produit à transporter, les entraîneurs (3) ayant des saillies (8) qui sont disposées les unes derrière les autres considéré dans la direction transversale de la bande et qui pénètrent dans des mailles (9) d'un filet (10) souple, constitué d'éléments (11, 12) sous forme de fils ou de bandes résistant à la traction, le filet formant les logements et s'étendant d'un entraîneur à l'autre, et les éléments (11, 12) en forme de fils ou de bandes du filet (10) ayant aux points d'intersection des liaisons résistant au cisaillement, **caractérisé en ce que** les saillies (8) sont disposées aux extrémités des entraîneurs (3) à distance de la surface déterminée par les bandes (2).

2. Convoyeur suivant la revendication 1, **caractérisé en ce que** les entraîneurs (3) sont un profilé en caoutchouc ou en une matière analogue.

3. Convoyeur suivant la revendication 1, **caractérisé en ce que** les saillies (8) sont reliées par un barreau (13) de sécurité qui s'étend dans la direction de l'entraîneur (3), qui se trouve au-dessus du filet (10) et qui est monté de manière amovible.

4. Convoyeur suivant la revendication 1, **caractérisé en ce que** les saillies (8) sont formées par un rebord coudé d'un barreau (18) dont une branche (19) est fixée à un barreau transversal, dont les extrémités sont arrimées sur les bandes (2) latérales du convoyeur.

5. Convoyeur suivant la revendication 1, **caractérisé en ce que** le filet (10) est tendu dans la région des convoyeurs (3) et entre les convoyeurs (3).

6. Convoyeur suivant la revendication 5, **caractérisé en ce que** le filet (10) est maintenu sans appui entre les entraîneurs (3).

7. Convoyeur suivant la revendication 1, **caractérisé en ce que** la dimension des mailles est comprise entre environ 0,5 et 5 cm, mais de préférence entre 1 et 3 cm.

8. Convoyeur suivant la revendication 1, **caractérisé en ce que** des éléments (12) du filet (10) s'étendent dans la direction longitudinale de la bande du convoyeur.

9. Convoyeur suivant la revendication 1, **caractérisé en ce que** devant et derrière les entraîneurs (3) sont montés des barreaux (14) transversaux qui sont arrimés aux bandes (2) latérales et sous lesquels passe le filet (10).

10. Convoyeur suivant la revendication 1, **caractérisé en ce que** les éléments formant le filet (10) font, avec la direction longitudinale du convoyeur, un angle, de préférence d'environ 45°.
